# EUROPÄISCHE PATENTSCHRIFT

(11) **EP 0 544 268 B1**
(45) Veröffentlichungstag und Bekanntmachung des Hinweises auf die Patenterteilung: **31.01.1996**
(21) Anmeldenummer: 92120119.0
(22) Anmeldetag: 25.11.1992
(51) Int. Cl.: B62D 53/12

(54) **Kupplungshakenabstützung am Sperrstück einer Sattelkupplungseinrichtung**
Support of the coupler jaw of the locking bar of a fifth-wheel coupling
Support de crochet d'attelage sur la barre de verrouillage d'une sellette d'attelage de semi-remorque

(30) Priorität: 27.11.1991 DE 4139002
(43) Veröffentlichungstag der Anmeldung: 02.06.1993
(73) Patentinhaber: ROCKINGER Spezialfabrik für Anhängerkupplungen GmbH & Co., D-80904 München (DE)
(72) Erfinder: Schneider, Frank, W-8038 Gröbenzell (DE); Engler, Thomas, W-8000 München 50 (DE)
(74) Vertreter: Weickmann, Heinrich, Dipl.-Ing.

(56) Entgegenhaltungen:
- DE-A- 2 508 255
- DE-U- 8 910 810

## Beschreibung

Die Erfindung betrifft eine Sattelkupplungseinrichtung zum Anbau an einem Zugfahrzeug und geeignet zum Ankuppeln eines mit Aufliegerplatte und Königszapfen ausgerüsteten Nachlauffahrzeugs an das Zugfahrzeug, diese Sattelkupplungseinrichtung umfassend eine Sattelplatte mit einer der allgemeinen Fahrtrichtung entsprechenden horizontalen Längsachse, einer Querachse und einer Hochachse,
wobei die Sattelplatte einen sich im wesentlichen in Richtung der Längsachse erstreckenden und entgegen der allgemeinen Fahrtrichtung offenen Einführungsschlitz für den Königszapfen aufweist,
wobei weiter an der Unterseite der Sattelplatte ein Kupplungshaken von im wesentlichen U-förmiger Gestalt um eine zur Hochachse im wesentlichen parallele Schwenkachse zwischen einer Kupplungsstellung und einer Öffnungsstellung schwenkbar gelagert ist,
wobei weiter in der Kupplungsstellung ein erster U-Schenkel des den Königszapfen eingabelnden Kupplungshakens in der allgemeinen Fahrtrichtung vor dem Königszapfen liegt und ein zweiter U-Schenkel den Einführungsschlitz überbrückend, bezogen auf die allgemeine Fahrtrichtung, hinter dem Königszapfen liegt,
wobei weiter in der Kupplungsstellung ein an der Unterseite der Sattelplatte angeordnetes zwischen einer Sperrstellung und einer Freigabestellung verstellbares Sperrstück in seiner Sperrstellung in der allgemeinen Fahrtrichtung hinter dem zweiten U-Schenkel den Kupplungshaken in Kupplungsstellung haltend anliegt,
wobei weiter der Kupplungshaken in der Kupplungsstellung außerhalb des Bereichs des Einführungsschlitzes an der Unterseite der Sattelplatte in Richtung der Hochachse abstützbar ist,
und wobei weiter der Königszapfen in der Kupplungsstellung durch den Kupplungshaken in Richtung der Hochachse gegen Bewegung nach oben abstützbar ist. Eine derartige Sattelkupplungseinrichtung ist aus dem Gebrauchsmuster DE-U-8910810.8 bekannt.

Unter einem Königszapfen wird in der Terminologie der Kupplungshersteller ein von der Auflagefläche des Nachlauffahrzeugs (auch Auflieger genannt) nach unten abstehender rotationssymmetrischer Zapfen verstanden, welcher mit mindestens einer Schulterfläche ausgeführt ist, welche bei Auftreten einer Abhebewirkung zwischen Sattelplatte und Aufliegeplatte des Nachlauffahrzeugs eine Trennung dieser Platten verhindert. Solche Abhebewirkungen können im Betrieb eines Sattelschleppers auftreten, wenn der Sattelschlepper unebenes Gelände befährt und dabei eine Nickbewegung um eine durch den Königszapfen verlaufende Querachse zwischen Zugfahrzeug und Nachlauffahrzeug eintritt, weiterhin dann, wenn das Nachlauffahrzeug an seinem rückwärtigen Ende übermäßig belastet wird, z.B. bei Kippen einer Ladefläche, und weiter auch dann, wenn zwischen der die Sattelplatte tragenden Brücke des Zugfahrzeugs und der Auflageplatte des Nachlauffahrzeugs angeregt etwa durch Fahrbahnunebenheiten, Schwingungen auftreten. Die bei solcher Abhebewirkung von dem Königszapfen auf den Kupplungshaken übertragenen Vertikalkräfte werden bei bekannten Sattelkupplungseinrichtungen auf die Sattelplatte übertragen, an welcher der Kupplungshaken entweder ständig anliegt oder aufgrund eines geringen Axialspiels anlegbar ist. Die Anlage zwischen dem Kupplungshaken und der Sattelplatte kann aber in jedem Fall nur außerhalb des Bereichs des Einführungsschlitzes der Sattelplatte eintreten. Der zweite U-Schenkel des Kupplungshakens kann in dem Bereich, in dem er den Einführungsschlitz der Sattelplatte überbrückt, nicht abgestützt sein.

Der Erfindung liegt die Aufgabe zugrunde, eine Kupplungseinrichtung der eingangs bezeichneten Bauart so auszugestalten, daß erhöhte Vertikal- oder Kippkräfte zwischen dem Zugfahrzeug und dem Nachlauffahrzeug in der Sattelkupplungseinrichtung ohne Zerstörung oder Beschädigungsgefahr übertragen werden können.

Zur Lösung dieser Aufgabe wird erfindungsgemäß vorgeschlagen, daß der zweite U-Schenkel des Kupplungshakens in der Kupplungsstellung durch das den Einführungsschlitz überbrückende Sperrstück gegenüber der Unterseite der Sattelplatte in Richtung der Hochachse abstützbar ist.

Durch die erfindungsgemäße Ausgestaltung der Sattelkupplungseinrichtung wird die bisherige Schwachstelle der Vertikalkraftübertragung im Bereich des den Einführungsschlitz überbrückenden zweiten U-Schenkels beseitigt, der Kupplungshaken kann nunmehr auf dem größten Teil seines Gesamtumrisses an der Sattelplatte unmittelbar bzw. mittelbar abgestützt werden.

Die Stützwirkung des Sperrstücks für den Kupplungshaken kann dadurch ausgeübt werden, daß an dem Sperrstück neben mindestens einer zu der Hochachse im wesentlichen parallelen Sperrfläche, welche mit einer Gegensperrfläche des Kupplungshakens zusammenwirkt, eine zur Hochachse im wesentlichen orthogonale Stützfläche vorgesehen ist, welche mit einer Gegenstützfläche des Kupplungshakens zusammenwirkt.

Eine durch einfache mechanische Bearbeitung herstellbare und stabile Ausführungsform des Kupplungshakens und des Sperrstücks erhält man dann, wenn das dem Kupplungshaken zugekehrte Profil des Sperrstücks im wesentlichen Z-förmig ausgebildet ist mit zwei zur Hochachse im wesentlichen parallelen Flächen und einer diese parallelen Flächen verbindenden Stützfläche und wenn das gegenüberliegende Profil des zweiten U-Schenkels entsprechend komplementär Z-förmig ausgebildet ist.

Um Kollisionen beim Einführen des Sperrstücks in seine Sperrstellung durch Zusammentreten von Endkanten der Stützfläche und der Gegenstützfläche zu vermeiden, kann weiter vorgesehen sein, daß an der Stützfläche oder/und an der Gegenstützfläche eine Einweisungsschräge angebracht ist, welche bei der Überführung des Sperrstücks in seine Sperrstellung zu dem in Kupplungsstellung befindlichen Kupplungshaken den Eingriff zwischen der Stützfläche und der Gegenstützfläche einleitet.

Um höchste Kräfte in Richtung der Hochachse von dem Königszapfen über den Kupplungshaken und das Sperrstück auf die Sattelplatte übertragen zu können, ist vorgesehen, daß das Sperrstück in der Sperrstellung beidseits des Einführungsschlitzes an der Sattelplatte abstützbar ist.

Es ist möglich, den zweiten U-Schenkel beidseits des Einführungsschlitzes an der Sattelplatte unmittelbar abzustützen. In diesem Fall wird man die Stützkraftübertragung durch das Sperrstück insbesondere auf denjenigen Bereich des zweiten U-Schenkels konzentrieren, welcher in der Kupplungsstellung den Einführungsschlitz überbrückt.

Um eine möglichst allseitige und symmetrische Abstützung des Kupplungshakens an der Sattelplatte zu gewährleisten, wird empfohlen, daß der erste U-Schenkel in der Kupplungsstellung beidseits einer zur Längsachse parallelen Längsmittellinie des Einführungsschlitzes an der Sattelplatte abstützbar ist.

Sattelplatten sind regelmäßig an ihrer Unterseite durch Stützrippen verstärkt. Man sollte versuchen, den Kupplungshaken oder/und das Sperrstück möglichst an solchen Stützrippen anliegen zu lassen, weil dort die größten Druckkräfte auf die Sattelplatte übertragen werden können. Soweit die Stützrippen nicht ohnehin aufgrund ihrer geometrischen Verteilung der Forderung entsprechen, eine möglichst allseitige und symmetrische Kraftübertragung zwischen Kupplungshaken und Sperrstück einerseits sowie Sattelplatte andererseits zu erhalten, kann man zusätzliche Rippen oder/und Vorsprünge an der Unterseite der Sattelplatte speziell zu Abstützungszwecken vorsehen. Da die Stützflächen für den Kupplungshaken und das Sperrstück im Hinblick auf eine reibungsarme Führung und eine definierte Auflage bearbeitet werden müssen, ist es auch aus diesem Grunde vorteilhaft, die Stützflächen an Rippen oder/und besonders geschaffenen Vorsprüngen anzubringen.

Die beiliegenden Figuren erläutern die Erfindung anhand eines Ausführungsbeispiels; es stellen dar:
- Figur 1: eine schematische Darstellung einer Sattelkupplungseinrichtung in Draufsicht;
- Figur 2: eine schematische Darstellung des Zusammenwirkens von Kupplungshaken, Sperrstück, Königszapfen und Einführungsschlitz der Sattelplatte bei einer erfindungsgemäßen Sattelkupplungseinrichtung in einer Draufsicht entsprechend Figur 1 unter Weglassung des Körpers der Sattelplatte und
- Figur 3: einen Schnitt nach Linie III-III der Figur 1.

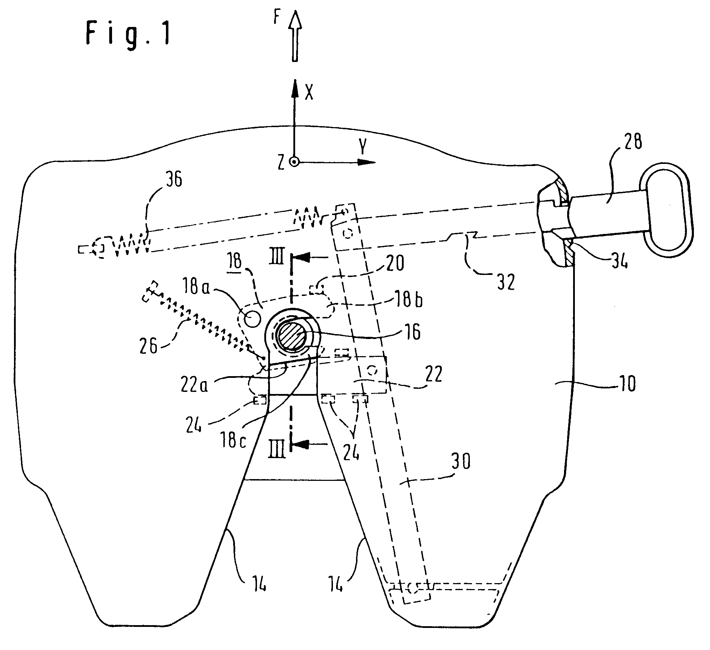

In Figur 1 ist eine Sattelplatte ganz allgemein mit 10 bezeichnet. Zur leichteren Beschreibung wird auf ein gegenüber der Sattelplatte fest angeordnetes rechtwinkeliges Koordinatensystem mit einer Längsachse X, einer Querachse Y und einer Hochachse Z verwiesen.

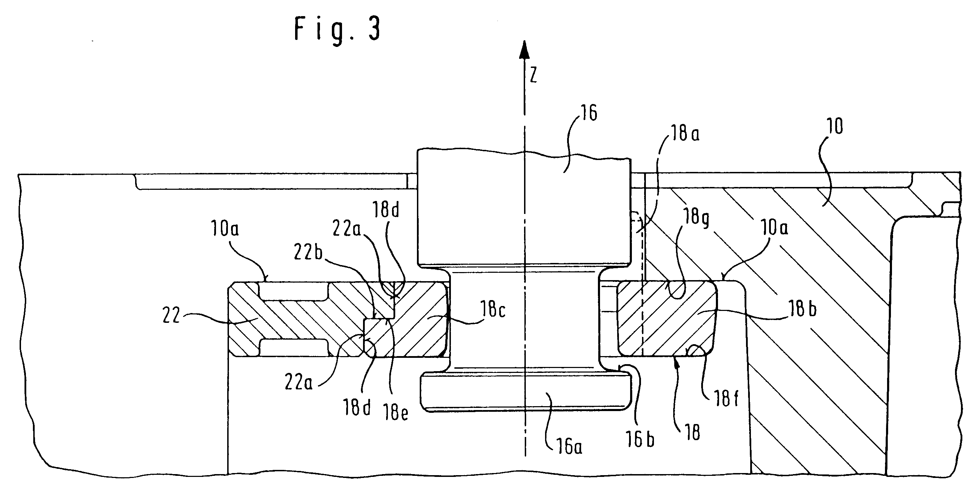

Die allgemeine Fahrtrichtung entspricht der Längsachse X und ist mit einem Pfeil F angedeutet. Die Sattelplatte 10 ist mit einem Einführungsschlitz 14 für die Einführung eines sogenannten Königsszapfens ausgebildet. Der Einführungsschlitz 14 ist entgegen der allgemeinen Fahrtrichtung offen. Der Königszapfen ist mit 16 bezeichnet und in Figur 3 im einzelnen dargestellt.

Die Kupplung zwischen dem mit der Sattelplatte 10 ausgerüsteten Zugfahrzeug und dem mit dem Königszapfen 16 sowie einer Auflageplatte ausgerüsteten Nachlauffahrzeug erfolgt, indem bei stillstehendem Nachlauffahrzeug, d.h. also stillstehendem Königszapfen, das Zugfahrzeug mit der Sattelplatte rückwärts, d.h. entgegen der Fahrtrichtung F, fährt, so daß der Einführungsschlitz 14 sich über den Königszapfen 16 schiebt und diesen eingabelt. In Figur 1 befindet sich die Sattelplatte 10 in der Kupplungsstellung gegenüber dem Königszapfen 16. Die Zug- und Schubverbindung zwischen der Sattelplatte 10 und dem Königszapfen 16 ist durch einen Kupplungshaken 18 hergestellt, welcher in Figur 1 in seiner Kupplungsstellung gezeichnet ist. Dieser im wesentlichen U-förmige Kupplungshaken 18 ist um eine zur Hochachse Z parallele Schwenkachse 18a schwenkbar an der Sattelplatte 10 gelagert und umfaßt einen ersten U-Schenkel 18b sowie einen zweiten U-Schenkel 18c. In der Kupplungsstellung gemäß Figur 1 gabeln die beiden U-Schenkel 18b und 18c den Königszapfen ein. Der zweite U-Schenkel 18c überbrückt dabei den Einführungsschlitz 14 der Sattelplatte, so daß er ein Austreten des Königszapfens 16 aus dem Einführungsschlitz 14 beim Vorwärtsfahren des Zugfahrzeugs und damit der Sattelplatte 10 in Pfeilrichtung F verhindern kann. Die Lage des Kupplungshakens 18 in der Kupplungsstellung gemäß Figur 1 ist einerseits durch einen Anschlag 20 für den ersten U-Schenkel 18b und andererseits durch ein Sperrstück 22 bestimmt. Dieses Sperrstück 22 ist in Richtung der Querachse durch noch zu beschreibende Mittel zwischen einer Sperrstellung gemäß Figur 1 und einer nach rechts versetzten Freigabestellung beweglich. Das Sperrstück 22 ist dabei durch Führungselemente 24 im wesentlichen parallel zur Querachse Y geführt. In der Kupplungsstellung gemäß Figur 1 liegt das Sperrstück 22 mit Sperrflächen 22a an Gegensperrflächen 18d des Kupplungshakens 18 an, so daß dieser in der Schwenklage gemäß Figur 1 in Eingriff mit dem Anschlag 20 gesichert ist.

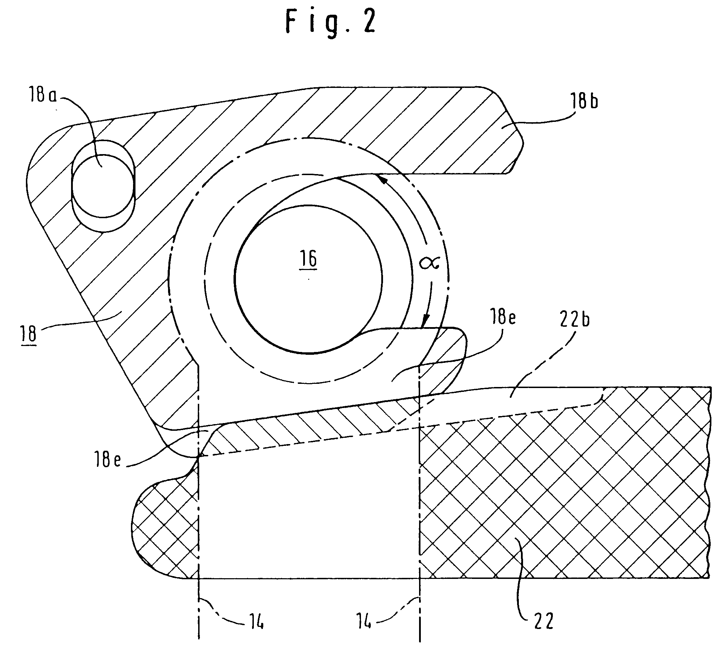

Wie insbesondere aus Figur 3 ersichtlich ist, übergreift das Sperrstück 22 mit einer Stützfläche 22b eine Gegenstützfläche 18e des Kupplungshakens 18. Die Ausdehnungen der Stützfläche 22b und der Gegenstützfläche 18e sind in Figur 2 zu erkennen.

An den Königszapfen 16 ist ein Ringflansch 16a mit einer Schulterfläche 16b angebracht. Stellt man sich vor, daß die Sattelplatte 10 in fester Position in vertikaler Richtung Z ist und stellt man sich weiter vor, daß der Königszapfen 16 in Richtung der Hochachse Z angehoben wird, etwa durch starke Belastung des hinter den Hinterrädern gelegenen Teils des Nachlauffahrzeugs, so gelangt die Schulterfläche 16b in Eingriff mit der Unterseite 18f des Kupplungshakens und dieser gelangt mit seiner Oberseite 18g in Eingriff mit der Unterseite 10a an der Sattelplatte 10. In Figur 2 ist derjenige Bereich des Kupplungshakens 18, der grundsätzlich zur Abstützung an der Unterseite 10a der Sattelplatte zur Verfügung steht, mit schraffierten Linien dargestellt, die von links unten nach rehts oben verlaufen. Man erkennt aus Figur 2, daß diese Schraffur im Bereich des Einführungsschlitzes vollständig unterbrochen ist; hier besteht keine Möglichkeit der unmittelbaren Abstützung des Kupplungshakens 18 an der Unterseite 10a der Sattelplatte.

Hier setzt nun der wesentliche Gedanke der Erfindung ein: In dem Bereich des Einführungsschlitzes 14 ist der Kupplungshaken, und zwar dessen zweiter Schenkel 18c, durch das Sperrstück 22 abgestützt im Eingriffsbereich der Stützfläche 22b und der Gegenstützfläche 18e gemäß Figur 3. Der Eingriffsbereich zwischen der Stützfläche 22b und der Gegenstützfläche 18e ist in Figur 2 durch die Schraffur mit von rechts unten nach links oben verlaufenden Linien dargestellt. Andererseits kann das Sperrstück 22 sich wiederum an der Unterseite 10a der Sattelplatte 10 abstützen, wie in Figur 3 dargestellt ist. In Figur 2 ist derjenige Bereich, der grundsätzlich für die Abstützung des Sperrstücks 22 an der Unterseite der Sattelplatte 10 zur Verfügung steht, durch Kreuzschraffur gekennzeichnet.

Die Figur 2 läß im Ergebnis erkennen, daß der Kupplungshaken 18 auf dem größten Teil seines Umrisses entweder unmittelbar an der Sattelplatte 10 abgestützt ist, nämlich an dem schraffierten Bereich mit den von links unten nach rechts oben verlaufenden Schraffurlinien oder mittelbar an der Sattelplatte 10 abgestützt ist, nämlich in dem schraffierten Bereich mit den von rechts unten nach links oben verlaufenden Schraffurlinien. Damit können also Abhebekräfte auf den Königszapfen 16 in Pfeilrichtung Z der Figur 3 im wesentlichen auf dem gesamten Umfang des Konigszapfens 16 (ausgespart ist nur noch der Einführungsbereich α des Kupplungshakens) auf die Sattelplatte übertragen werden. Zerstörungen oder Beschädigungen des Kupplungshakens 18 sind damit auch bei größten Abhebekräften unterbunden.

Es sei vermerkt, daß der Kupplungshaken 18 nicht im Gesamtbereich der Schraffur mit den von links unten nach rechts oben verlaufenden Schraffurlinien an der Unterseite 10a der Sattelplatte abgestützt wird. Man kann zur Abstützung des Kupplungshakens 18 an der Unterseite der Sattelplatte vorspringende Versteifungsrippen oder spezielle Stützvorsprünge verwenden, die leicht bearbeitet werden können und eine definierte Krafteinleitung in die Sattelplatte gewährleisten. Ebenso ist es nicht erforderlich, das Sperrstück 22 in den gesamten kreuz-schraffierten Bereichen an der Unterseite der Sattelplatte abzustützen. Auch für die Abstützung des Sperrstücks 22 können an der Unterseite der Sattelplatte Versteifungsrippen oder/und speziell zur Abstützung dienende Vorsprünge vorgesehen sein, die der geforderten Führungsqualität entsprechend bearbeitet sein können und eine definierte Krafteinleitung sicherstellen. Von Bedeutung ist allerdings, daß das Sperrstück 22 beidseits des Einführungsschlitzes 14, also in beiden kreuz-schraffierten Bereichen, irgendwie abgestützt ist.

Nur der Vollständigkeit halber sei darauf hingewiesen, daß der Kupplungshaken 18 durch eine Feder 26 im Sinne eines Übergangs in eine Öffnungsstellung vorgespannt ist, in der sich der U-Schlitz des Kupplungshakens in annähernder Deckung mit dem Einführungsschlitz 14 der Sattelplatte 10 befindet.

Durch ein Gestänge 28,30 kann das Sperrstück 22 in Figur 1 längs seiner Führungselemente 24 nach rechts verschoben werden. Dann wird der Kupplungshaken 18 von dem Sperrstück 22 freigegeben und tritt unter der Wirkung der Feder 26 in seine soeben beschriebene Öffnungsstellung. Das Sperrstück 22 kann in der nach rechts verschobenen Freigabestellung durch Wechselwirkung einer Kerbe 32 und eines Anschlags 34 an dem Gestängeteil 28 bzw. der Sattelplatte 10 gehalten werden. Eine Trennung von Zugfahrzeug und Nachlauffahrzeug kann dann durch Vorfahren des Zugfahrzeugs vorgenommen werden. Der Kupplungshaken 18 verharrt dabei in seiner Öffnungsstellung und das Sperrstück 22 verharrt in seiner Freigabestellung. Erst wenn der Königszapfen 16 beim erneuten Kuppeln von Zugfahrzeug und Nachlauffahrzeug wieder in die Stellung gemäß Figur 1 eintritt, wird der Kupplungshaken 18 wieder in die in Figur 1 gezeichnete Stellung entgegen der Wirkung der Feder 26 gebracht. Außerdem kann durch das Einfahren des Konigszapfens 16 in den Einführungsschlitz 14 ein Impuls auf das Gestänge 28,30 ausgeübt werden, der eine zwangsläufige Lösung der Verrastung zwischen der Ausnehmung 32 und dem Anschlag 34 bewirkt, so daß das Sperrstück 22 zwangsläufig von seiner Freigabestellung wieder in die Sperrstellung gemaß Figur 1 durch Wirkung der Feder 36 tritt.

## Patentansprüche

1. Sattelkupplungseinrichtung zum Anbau an einem Zugfahrzeug und geeignet zum Ankuppeln eines mit Aufliegerplatte und Königszapfen (16) ausgerüsteten Nachlauffahrzeugs an das Zugfahrzeug, diese Sattelkupplungseinrichtung umfassend
eine Sattelplatte (10) mit einer der allgemeinen Fahrtrichtung (F) entsprechenden horizontalen Längsachse (X), einer Querachse (Y) und einer Hochachse (Z),
wobei die Sattelplatte (10) einen sich im wesentlichen in Richtung der Längsachse (X) erstreckenden und entgegen der allgemeinen Fahrtrichtung (F) offenen Einführungsschlitz (14) für den Königszapfen (16) aufweist,
wobei weiter an der Unterseite (10a) der Sattelplatte (10) ein Kupplungshaken (18) von im wesentlichen U-förmiger Gestalt um eine zur Hochachse (Z) im wesentlichen parallele Schwenkachse (18a) zwischen einer Kupplungsstellung und einer Öffnungsstellung schwenkbar gelagert ist,
wobei weiter in der Kupplungsstellung ein erster U-Schenkel (18b) des den Königszapfen (16) eingabelnden Kupplungshakens (18) in der allgemeinen Fahrtrichtung (F) vor dem Königszapfen (16) liegt und ein zweiter U-Schenkel (18c) den Einführungsschlitz (14) überbrückend, bezogen auf die allgemeine Fahrtrichtung (F), hinter dem Königszapfen (16) liegt,
wobei weiter in der Kupplungsstellung ein an der Unterseite (10a) der Sattelplatte (10) angeordnetes zwischen einer Sperrstellung und einer Freigabestellung verstellbares Sperrstück (22) in seiner Sperrstellung in der allgemeinen Fahrtrichtung (F) hinter dem zweiten U-Schenkel (18c) den Kupplungshaken (18) in Kupplungsstellung haltend anliegt,
wobei weiter der Kupplungshaken (18) in der Kupplungsstellung außerhalb des Bereichs des Einführungsschlitzes (14) an der Unterseite (10a) der Sattelplatte (10) in Richtung der Hochachse (Z) abstützbar ist,
und wobei weiter der Konigszapfen (16) in der Kupplungsstellung durch den Kupplungshaken (18) in Richtung der Hochachse (Z) gegen Bewegung nach oben abstützbar ist,
**dadurch gekennzeichnet,**
daß der zweite U-Schenkel (18c) des Kupplungshakens (18) in der Kupplungsstellung durch das den Einführungsschlitz (14) überbrückende Sperrstück (22) gegenüber der Unterseite (10a) der Sattelplatte (10) in Richtung der Hochachse (Z) abstützbar ist.

2. Sattelkupplungseinrichtung nach Anspruch 1,
**dadurch gekennzeichnet**,
daß an dem Sperrstück (22) neben mindestens einer zu der Hochachse (Z) im wesentlichen parallelen Sperrfläche (22a), welche mit einer Gegensperrfläche (18d) des Kupplungshakens (18) zusammenwirkt, eine zur Hochachse (Z) im wesentlichen orthogonale Stützfläche (22b) vorgesehen ist, welche mit einer Gegenstützfläche (18e) des Kupplungshakens (18) zusammenwirkt.

3. Sattelkupplungseinrichtung nach Anspruch 2,
**dadurch gekennzeichnet**,
daß das dem Kupplungshaken (18) zugekehrte Profil des Sperrstücks (22) im wesentlichen Z-förmig ausgebildet ist mit zwei zur Hochachse (Z) im wesentlichen parallelen Flächen (22a) und einer diese parallelen Flächen (22a) verbindenden Stützfläche (22b) und daß das gegenüberliegende Profil (18d,18e,18d) des zweiten U-Schenkels (18c) entsprechend komplementär Z-förmig ausgebildet ist.

4. Sattelkupplungseinrichtung nach Anspruch 2 oder 3,
**dadurch gekennzeichnet**,
daß an der Stützfläche (22b) oder/und an der Gegenstützfläche (18e) eine Einweisungsschräge angebracht ist, welche bei der Überführung des Sperrstücks (22) in seine Sperrstellung zu dem in Kupplungsstellung befindlichen Kupplungshaken (18) den Eingriff zwischen der Stützfläche (22b) und der Gegenstützfläche (18e) einleitet.

5. Sattelkupplungseinrichtung nach einem der Ansprüche 1 bis 4,
**dadurch gekennzeichnet**,
daß das Sperrstück (22) in der Sperrstellung beidseits des Einführungsschlitzes (14) an der Sattelplatte (10) abstützbar ist.

6. Sattelkupplungseinrichtung nach einem der Ansprüche 1 bis 5,
**dadurch gekennzeichnet**,
daß der zweite U-Schenkel (18c) in der Kupplungsstellung beidseits des Einführungsschlitzes (14) an der Sattelplatte (10) abstützbar ist und daß dieser zweite U-Schenkel (18c) durch das Sperrstück (22) im wesentlichen innerhalb des Einführungsschlitzes (14) abstützbar ist.

7. Sattelkupplungseinrichtung nach einem der Ansprüche 1 bis 6,
**dadurch gekennzeichnet**,
daß der erste U-Schenkel (18b) in der Kupplungsstellung beidseits einer zur Längsachse (X) parallelen Längsmittellinie des Einführungsschlitzes (14) an der Sattelplatte (10) abstützbar ist.

## Claims

1. A semi-trailer coupling device to be mounted on a towing vehicle and suitable for coupling a trailer vehicle, which is provided with a support plate and a king-pin (16), to the towing vehicle, said semi-trailer coupling device comprising a semi-trailer plate (10) with a horizontal longitudinal axis (X) corresponding to the general travel direction (F), a transverse axis (Y) and a vertical axis (Z), wherein the semi-trailer plate (10) has an entry slot (14) for the king-pin (16) extending substantially in the direction of the longitudinal axis (X) and open counter to the general travel direction (F), wherein also on the underside (10a) of the semi-trailer plate (10) a substantially U-shaped coupling hook (18) is mounted to be pivotable about a pivot axis (18a) substantially parallel to the vertical axis (Z) between a coupling position and an opening position, wherein also in the coupling position a first U-arm (18b) of the coupling hook (18) enclosing the king-pin (16) is situated in the general travel direction (F) in front of the king-pin (16) and a second U-arm (18c) is situated behind the king-pin (16) bridging the entry slot, in relation to the general travel direction (F), wherein also in the coupling position a locking member (22), which is disposed on the underside (10a) of the semi-trailer plate (10) and which is adjustable between a locking position and a release position, is applied in its locking position behind the second U-arm (18c), in the general travel direction (F), so as to retain the coupling hook (18) in the coupling position, wherein also the coupling hook (18) can be braced in the coupling position outside the region of the entry slot (14) against the underside (10a) of the semi-trailer plate (10) in the direction of the vertical axis (Z), and wherein also the king-pin (16) can be braced upwardly against movement in the coupling position by the coupling hook (18) in the direction of the vertical axis (Z), characterised in that the second U-arm (18c) of the coupling hook (18) can be braced in the coupling position with respect to the underside (10a) of the semi-trailer plate (10) in the direction of the vertical axis (Z) by the locking member (22) bridging the entry slot (14).

2. A semi-trailer coupling device according to Claim 1, characterised in that on the locking member (22) near at least one locking surface (22a), which is substantially parallel to the vertical axis (Z) and which co-operates with an opposite locking surface (18d) of the coupling hook (18), there is provided a support surface (22b) which is substantially orthogonal to the vertical axis (Z) and which co-operates with an opposite support surface (18e) of the coupling hook (18).

3. A semi-trailer coupling device according to Claim 2, characterised in that the profile of the locking member (22) facing the coupling hook (18) is formed substantially Z-shaped with two surfaces (22a) substantially parallel to the vertical axis (Z) and a support surface (22b) connecting these parallel surfaces (22a), and in that the opposite profile (18d,18e,18d) of the second U-arm (18c) is of correspondingly complementary Z-shaped form.

4. A semi-trailer coupling device according to Claim 2 or 3, characterised in that a directing slope is provided on the support surface (22b) and/or on the opposite support surface (18e), which when the locking member (22) is being transferred into its locking position relative to the coupling hook (18) situated in the coupling position initiates the engagement between the support surface (22b) and the opposite support surface (18e).

5. A semi-trailer coupling device according to any of Claims 1 to 4, characterised in that in the locking position the locking member (22) can be braced on either side of the entry slot (14) against the semi-trailer plate (10).

6. A semi-trailer coupling device according to any of Claims 1 to 5, characterised in that in the coupling position the second U-arm (18c) can be braced on either side of the entry slot (14) against the semi-trailer plate (10), and in that said second U-arm (18c) can be braced by the locking member (22) substantially inside the entry slot (14).

7. A semi-trailer coupling device according to any one of Claims 1 to 6, characterised in that in the coupling position the first U-arm (18b) can be braced against the semi-trailer plate (10) on either side of a longitudinal centre line of the entry slot (14) parallel to the longitudinal axis (X).

## Revendications

1. Dispositif d'accouplement à sellette apte à être monté sur un véhicule tracteur et permettant l'accouplement au véhicule tracteur d'un véhicule suiveur équipé d'une plaque d'appui et d'une goupille maîtresse (16), ce dispositif d'accouplement à sellette comprenant une plaque de sellette (10) avec un axe longitudinal horizontal (X) correspondant au sens général du déplacement (F), un axe transversal (Y) et un axe vertical (Z),
la plaque de sellette (10) présentant une fente d'introduction (14) pour la goupille maîtresse (16) qui s'étend sensiblement dans le sens de l'axe longitudinal (X) et qui est ouverte à l'opposé du sens de déplacement général (F),
un crochet d'accouplement (18) sensiblement en forme de U étant en outre supporté, sur la face inférieure (10b) de la plaque de sellette (10), de façon pivotante autour d'un axe de pivotement (18a) sensiblement parallèle à l'axe vertical (Z) entre une position d'accouplement et une position d'ouverture,
un premier bras de U (18b) du crochet d'accouplement (18) entourant la goupille maîtresse (16) en fourche se trouvant en outre devant la goupille maîtresse (16) dans la direction générale de la marche (F) dans la position d'accouplement et un deuxième bras de U (18c) se trouvant derrière la goupille maîtresse (16), par rapport à la direction générale de déplacement (F), et passant par-dessus la fente d'introduction (14),
une pièce de verrouillage (22) disposée sur la face inférieure (10a) de la plaque de sellette (10) et mobile entre une position de verrouillage et une position de dégagement reposant en outre dans sa position de verrouillage derrière le deuxième bras de U (18c) du crochet d'accouplement (18), dans la direction générale de déplacement (F), dans la position d'accouplement, en vue de son maintien,
le crochet d'accouplement (18) pouvant en outre, dans la position d'accouplement, s'appuyer à l'extérieur de la fente d'introduction (14) sur la face inférieure (10a) de la plaque de sellette (10) dans la direction de l'axe vertical (Z),
et la goupille maîtresse (16) pouvant en outre, dans la position d'accouplement, être soutenue par le crochet d'accouplement (18) dans le sens de l'axe vertical (Z) pour empêcher un mouvement vers le haut,
caractérisé en ce que le deuxième bras de U (18c) du crochet d'accouplement (18) peut, dans la position d'accouplement, être soutenu par la pièce de verrouillage (22) passant par-dessus la fente d'introduction (14) vis-à-vis de la face inférieure (10a) de la sellette (10) dans le sens de l'axe vertical (Z).

2. Dispositif d'accouplement à sellette selon la revendication 1, caractérisé en ce qu'il est prévu sur la pièce de verrouillage (22), outre au moins une surface de verrouillage (22a) sensiblement parallèle qui coopère avec une contre-surface de verrouillage (18d) du crochet d'accouplement (18), une surface d'appui (22b) sensiblement perpendiculaire à l'axe vertical (Z), qui coopère avec une contre-surface d'appui (18e) du crochet d'accouplement (18).

3. Dispositif d'accouplement à sellette selon la revendication 2, caractérisé en ce que le profil de la pièce de verrouillage (22) orienté vers le crochet d'accouplement (18) est sensiblement en forme de Z avec deux surfaces (22a) sensiblement parallèles à l'axe vertical (Z) et une surface d'appui (22b) reliant ces surfaces (22b) parallèles et en ce que le profil opposé (18d, 18e, 18d) du deuxième bras de U (18c) est conçu sous une forme de Z complémentaire correspondante.

4. Dispositif d'accouplement à sellette selon la revendication 2 ou 3, caractérisé en ce qu'il est prévu sur la surface d'appui (22b) ou/et sur la contre-surface d'appui (18e) un biseau d'orientation qui, lors du passage de la pièce de verrouillage (22) dans sa position de verrouillage vers le crochet d'accouplement (18) disposé dans la position d'accouplement, réalise un guidage de l'engagement entre la surface d'appui (22b) et la contre-surface d'appui (18e).

5. Dispositif d'accouplement à sellette selon l'une ou l'ensemble des revendications 1 à 4, caractérisé en ce que la pièce de verrouillage (22) peut s'appuyer sur la plaque de sellette (10) des deux côtés de la fente d'introduction (14).

6. Dispositif d'accouplement à sellette selon l'une ou l'ensemble des revendications 1 à 5, caractérisé en ce que le deuxième bras de U (18c) peut, dans la position d'accouplement, s'appuyer sur la plaque de sellette (10) des deux côtés de la fente d'introduction (14) et en ce que ce deuxième bras de U (18c) peut être soutenu par la pièce de verrouillage (22) sensiblement à l'intérieur de la fente d'introduction (14).

7. Dispositif d'accouplement à sellette selon l'une ou l'ensemble des revendications 1 à 6, caractérisé en ce que le premier bras de U (18b) peut, dans la position d'accouplement, être appuyé sur la plaque de sellette (10) des deux côtés d'un axe longitudinal médian de la fente d'introduction (14) parallèle à l'axe longitudinal (X).
